# EUROPÄISCHE PATENTSCHRIFT

(11) **EP 3 051 003 B1**
(45) Veröffentlichungstag und Bekanntmachung des Hinweises auf die Patenterteilung: **24.05.2017**
(21) Anmeldenummer: 15152702.5
(22) Anmeldetag: 27.01.2015
(51) Int. Cl.: C23F 11/00, C09D 5/00, C09D 7/00

(54) **Wässrige Zusammensetzung für Metallschutzlacke und diese Metallschutzlacke**
Aqueous composition for varnishes for protecting metal and these varnishes
Composition aqueuse pour peinture de protection métallique et cette peinture de protection métallique

(43) Veröffentlichungstag der Anmeldung: 03.08.2016
(73) Patentinhaber: DAW SE, 64372 Ober-Ramstadt (DE)
(72) Erfinder: MAUL, Susanne, 64397 Modautal (DE); SCHREIBER, Marc, 64711 Erbach (DE); OTTENS, Stephan, 64342 Seeheim-Jugenheim (DE)
(74) Vertreter: Metten, Karl-Heinz

(56) Entgegenhaltungen:
- EP-A1- 0 412 933
- EP-A1- 1 298 174
- EP-A1- 1 505 177
- US-A- 2 657 156
- US-A- 5 064 468
- US-A1- 2002 179 190
- US-A1- 2012 052 307

## Beschreibung

Die vorliegende Erfindung betrifft eine wässrige Zusammensetzung für Metallschutzlacke, eine Lackbeschichtung erhalten durch Auftragen der erfindungsgemäßen wässrigen Zusammensetzung, ein Metallsubstrat beschichtet mit der erfindungsgemäßen Lackbeschichtung, die Verwendung der erfindungsgemäßen wässrigen Zusammensetzung als Malerlack, Bautenlack, Industrielack oder Konsumlack und ein Verfahren zur Beschichtung eines Metallsubstrats mit der erfindungsgemäßen wässrigen Zusammensetzung.

Durch Korrosion entsteht jährlich ein immenser volkswirtschaftlicher Schaden. Metallische Bauteile werden daher nicht selten aufwendig bearbeitet, um Korrosionseffekte zu unterbinden bzw. zurückzudrängen. In vielen Fällen versucht man, Metallbauteile mit geeigneten Beschichtungen zu versehen, die das Metall vor Luft und Feuchtigkeit schützen sollen. Beispielsweise kann ein Metallbauteil nach Reinigung und Entfettung zunächst passiviert und/oder phosphatiert und anschließend mit einer oder mehreren Grundierungsschichten versehen werden, bevor eine Lackbeschichtung aufgebracht wird. Allerdings wird die Oberfläche von Metallbauteilen nicht selten während des gattungsgemäßen Gebrauchs beschädigt mit der Folge, dass Korrosionsschutzbeschichtungen unterwandert werden und es sogar zur Blasenbildung oder zum Abblättern kommen kann.

Bislang fehlt es noch stets an einfachen und zuverlässig applizierbaren Beschichtungssystemen für Metallbauteile, insbesondere Stahlbauteile, die diese mit einem hinreichenden Korrosionsschutz ausstatten. Hierbei wird es als erstrebenswert angesehen, wenn eine solche Beschichtung auf Stahl die Klassifizierung C3 lang gemäß DIN EN ISO 12944-2 erhält. Dieses ist bislang für SA 2 ½ gestrahlten Stahl bei Verwendung eines sogenannten wässrigen Eintopfsystems nicht möglich.

Insbesondere stoßen gattungsgemäße Korrosionsschutzsysteme auch dann an ihre Grenzen, wenn diese nicht nur einen hohen Korrosionsschutz bieten, sondern darüber hinaus auch die Möglichkeit offen halten sollen, beliebig eingefärbt appliziert werden zu können.

Zum gegenwärtigen Zeitpunkt greift man zur Korrosionsschutzbeschichtung von Stahlbauteilen häufig auf sogenannte Epoxy-Primer und einen zusätzlichen Decklack zurück. Eine solche Vorgehensweise ist jedoch aufwendig und kostenintensiv.

Probleme in Sachen Korrosionsschutz treten häufig auch bei Stahlbauteilen mit einer komplexen Geometrie auf. An Kantenverläufen kann es zur sogenannten Kantenflucht kommen, d.h. aufgrund der Viskosität der eingesetzten Systeme findet ein zu dünner Auftrag im Bereich von Kanten statt, so dass hier sehr schnell Korrosion stattfinden kann.

Es wäre somit wünschenswert, auf Korrosionsschutzbeschichtungssysteme zurückgreifen zu können, mit denen Metallbauteile und insbesondere Stahlbauteile dauerhaft und zuverlässig vor Korrosion geschützt werden. Demgemäß lag der vorliegenden Erfindung die Aufgabe zugrunde, Beschichtungssysteme für Metallbauteile, insbesondere Stahlbauteile, zur Verfügung zu stellen, die nicht mehr mit den geschilderten Nachteilen des Stands der Technik behaftet sind und die insbesondere einfach und zuverlässig applizierbar sind und über einen längeren Zeitraum einen hinreichenden Korrosionsschutz bieten.

Demgemäß wurde eine wässrige Zusammensetzung für Metallschutzlacke, insbesondere eine wässrige Eintopf-Zusammensetzung, gefunden, umfassend
a) mindestens ein organisches Bindemittel auf der Basis mindestens eines in Wasser dispergierten oder dispergierbaren Polymers, gebildet aus gleichen oder verschiedenen Monomeren, wobei mindestens eines der Monomere ein Acrylsäureester, Methacrylsäureester, Vinylacetat, Vinylchlorid, Versatat, Acrylnitril oder eine vinylaromtische Verbindung darstellt,
b) mindestens ein organisches Lösemittel und/oder mindestens ein Filmbildehilfsmittel,
c) mindestens eine in Wasser lösliche Form der Nitrophthalsäure,
d) mindestens eine in Wasser lösliche Form einer aromatischen Carbonsäure, insbesondere mindestens eine in Wasser lösliche Form einer aromatischen Monocarbonsäure
e) mindestens eine in Wasser lösliche Form einer aliphatischen C₆- bis C₉- Carbonsäure, insbesondere mindestens eine in Wasser lösliche Form einer aliphatischen C₆- bis C₉- Monocarbonsäure,
f) mindestens eine Orthophosphatverbindung,
g) mindestens eine organisch modifizierte Schichtsilikatkomponente und/oder mindestens einen Polyurethanverdicker,
h) mindestens ein blättchenförmiges Material anorganischen Ursprungs ausgewählt aus der Gruppe bestehend aus Glimmer, insbesondere Eisenglimmer, Kaolin, blättchenförrmigem Quarz, Glasblättchen (Flakes) und Schichtsilikaten oder deren Mischung, und
i) Wasser.

Es hat sich überraschend gezeigt, dass die erfindungsgemäßen wässrigen Beschichtungszusammensetzungen auch bei anspruchsvollen Metall- bzw. Stahlbauteilen, das heißt z.B. solchen mit komplexer Geometrie, einen überaus zufriedenstellenden Korrosionsschutz liefern, und zwar ohne dass auf ein System aus einer Abfolge unterschiedlicher Beschichtungen zurückgegriffen werden muss. Vielmehr wird mit der erfindungsgemäßen wässrigen Beschichtungszusammensetzung ein Eintopfsystem zur Verfügung gestellt, das auf unkomplizierte und einfache Weise hinreichenden Korrosionsschutz liefert. Hierbei ist es zumeist nicht einmal notwendig, wenngleich von Fall zu Fall durchaus zweckdienlich, das Metallbauteil in einem Vorbehandlungsschritt zu passivieren. Eintopfsysteme bzw. - zusammensetzungen zeichnen sich dadurch aus, dass sie als solche nicht nur gelagert, sondern auch appliziert werden können, und zwar ohne dass es der Zugabe weiterer Komponenten kurz vor der eigentlichen Applikation auf einer Oberfläche bedarf. Eintopfsysteme sind als solche einsatzfähig.

Ein besonderer Vorteil der erfindungsgemäßen wässrigen Beschichtungszusammensetzungen ist auch, dass diese sich nahezu beliebig einfärben lassen. Demgemäß umfasst eine solche Beschichtungszusammensetzung ferner
j) mindestens ein Pigment und/oder mindestens einen Farbstoff.

Die erfindungsgemäße Beschichtungszusammensetzung kann zum Beispiel als sogenannte farblose Grundrezeptur, als sogenannte weiße Beschichtungszusammensetzung oder als in nahezu beliebiger Farbe abgetönte Beschichtungszusammensetzung verwendet werden. Die weiß eingefärbte Beschichtungszusammensetzung erhält man regelmäßig durch Zusatz mindestens eines Weißpigments ausgewählt aus Gruppe bestehend aus Titandioxid, Bariumsulfat, Zinksulfid, Zinkoxid und Lithopone oder einer beliebigen Mischung, insbesondere Titandioxid. Bevorzugt wird bei diesen weiß eingefärbten Beschichtungszusammensetzungen auf den Einsatz von Talkum und gegebenenfalls auch von weiteren Füllstoffen verzichtet. Hingegen hat es sich als vorteilhaft erwiesen, dass die weiß eingefärbten wässrigen Beschichtungszusammensetzungen einen Polyurethanverdicker (Komponente g)) enthalten, vorzugsweise einen, insbesondere lösemittelfreien, nicht-ionischen Polyurethanverdicker. Für die abgetönten erfindungsgemäßen wässrigen Beschichtungszusammensetzungen greift man zweckmäßigerweise auf eine Grundrezeptur zurück, die vorzugsweise kein Weißpigment, insbesondere kein Titandioxid, enthält, und die mit mindestens einem Pigment, das nicht ein Weißpigment, insbesondere nicht Titandioxid ist, auch Buntpigment genannt, und/oder mindestens einem Farbstoff versetzt ist. Soll eine farblose bzw. transparente Grundrezeptur für die erfindungsgemäßen wässrigen Beschichtungszusammensetzungen zum Einsatz kommen, d.h. sind keine Weiß- und auch keine anderen Pigmente und Farbstoffe zugegen, enthält diese Zusammensetzung einen Füllstoff, vorzugsweise Talkum, und einen Polyurethanverdicker gemäß Komponente g).

In einer besonders zweckmäßigen Ausgestaltung umfassen die erfindungsgemäßen wässrigen Beschichtungszusammensetzungen ferner k) mindestens ein Netzmittel und/oder 1) mindestens ein Wasserretentionsmittel.

Die erfindungsgemäße wässrige Beschichtungszusammensetzung kann in einer bevorzugten Ausführungsform ferner umfassen
m) mindestens einen, insbesondere silikatischen und/oder calcitischen, Füllstoff,
n) mindestens einen Entschäumer und/oder Entlüfter, insbesondere jeweils auf Silikonbasis und/oder
o) mindestens ein Konservierungsmittel.

Auch haben sich solche erfindungsgemäßen wässrigen Beschichtungszusammensetzungen als besonders geeignet erwiesen, die zumindest anfänglich mindestens ein Neutralisationsmittel (Komponente p)), beispielsweise Natronlauge, insbesondere mindestens ein flüchtiges Neutralisationsmittel wie Ammoniaklösung und/oder Amine wie 2-Amino-2-methyl-1-propanol, insbesondere Ammoniak enthalten. Es hat sich dabei überraschend gezeigt, dass durch den Einsatz von Neutralisationsmitteln, insbesondere von flüchtigen Neutralisationsmitteln, die Wasserbeständigkeit der erfindungsgemäßen wässrigen Beschichtungszusammensetzungen verbessert werden kann.

Als besonderer Vorteil hat sich überraschenderweise herausgestellt, dass man die Grundrezeptur der erfindungsgemäßen wässrigen Beschichtungszusammensetzung, d. h, eine solche erfindungsgemäße wässrige Beschichtungszusammensetzung, die noch kein Pigment und keinen Farbstoff enthält, und eine weitere Zusammensetzung, welche das für das Abtönen erforderliche Pigment bzw. den hierfür erforderlichen Farbstoff enthält, separat erstellen und lagern kann und erst bei Bedarf unter Erhalt einer abgetönten wässrigen Beschichtungszusammensetzung vermengt. Diese weitere Zusammensetzung, auch Abtönzusammensetzung genannt, enthält in einer besonders zweckmäßigen Ausgestaltung neben mindestens einem Pigment und/oder Farbstoff (Komponente j)), insbesondere Pigment, mindestens ein Netzmittel (Komponente k)) und Wasser (Komponente i)).

In einer bevorzugten Ausgestaltung enthält diese Abtönzusammensetzung mindestens ein Wasserretentionsmittel (Komponente 1)). Diese Abtönzusammensetzung liegt in einer besonders geeigneten Ausführungsform in Pastenform vor.

Demgemäß wird die der Erfindung zugrunde liegende Aufgabe auch gelöst durch einen Kit-of-parts enthaltend eine erfindungsgemäße wässrige Beschichtungszusammensetzung, insbesondere eine pigment- und farbstofffreie erfindungsgemäße wässrige Beschichtungszusammensetzung (Komponenten a) bis i) und gegebenenfalls mindestens eine Komponente ausgewählt aus der Gruppe bestehend aus den Komponenten k) bis p) oder deren beliebige Mischung), und eine Abtönzusammensetzung, enthaltend mindestens ein Pigment und/oder mindestens einen Farbstoff (Komponente j)), mindestens ein Netzmittel (Komponente k)) und Wasser (Komponente i)) sowie gegebenenfalls mindestens ein Wasserretentionsmittel (Komponente 1)).

Selbstverständlich kann die erfindungsgemäße Beschichtungszusammensetzung auch sogleich mit einem Pigment und/oder einem Farbstoff und einem Netzmittel und gegebenenfalls einem Wasserretentionsmittel in abgemischter Form vorliegen, wobei diese Komponenten dann in beliebiger Reihenfolge einzeln oder gemeinsam miteinander vermengt werden können.

Geeignete Netzmittel umfassen Substanzen mit Tensidwirkung, z.B. niedrigmolekulare, amphiphile Verbindungen wie ethoxylierte Talgalkylamine, TMDD (2,4,7,9-Tetramethyl-5-decin-4,7-diol), ethoxyliertes TMDD, Ethylendiamin-EO-PO Blockcopolymere oder deren Mischungen.

In einer besonders zweckmäßigen Ausgestaltung der erfindungsgemäßen wässrigen Beschichtungszusammensetzungen kann vorgesehen sein, dass diese umfassen 5 bis 35 Gew.-% an Komponente a),
1 bis 14 Gew.-%, insbesondere 1 bis 8,5 Gew.-%, an Komponente b),
0,4 bis 1,0 Gew.-% an Komponente c),
0,4 bis 1,0 Gew.-% an Komponente d),
0,7 bis 1,2 Gew.-% an Komponente e),
2 bis 10 Gew.-%, insbesondere 3 bis 8 Gew.-%, an Komponente f),
15 bis 35 Gew.-%, insbesondere 4 bis 9 Ges.-%, an Komponente g),
2 bis 10 Gew.-%, insbesondere 4 bis 9 Gew.-%, an Komponente h),
0 bis 35 Gew.-%, insbesondere 5 bis 35 Gew.-%, besonders bevorzugt 0,5 bis 19 Gew.-%, an Komponente j),
0 bis 8 Ges.-%, insbesondere 0,2 bis 4 Gew.-%, an Komponente k),
0 bis 6 Gew.-%, insbesondere 0 bis 3 Gew.-%, an Komponente 1),
0 bis 20 Gew.-%, insbesondere 6 bis 15 Gew.-%, an Komponente m),
0 bis 1,5 Gew.-%, insbesondere 0 bis 1 Gew.-%, an Komponente n),
0 bis 0,4 Gew.-%, insbesondere 0 bis 0,3 Gew.-%, an Komponente o) und
0 bis 1 Gew.-%, insbesondere 0 bis 0,5 Gew.-%, an Komponente p) und
wobei die Menge der Komponenten a) bis h) und j) bis p) stets so gewählt wird, dass deren Summe kleiner 100 Gew.-% ist und wobei Wasser (Komponente i)) in einer Menge vorliegt, dass die Gesamtmenge an Komponenten der wässrigen Beschichtungszusammensetzung stets 100 Gew.-% ergibt. Die Menge an Wasser liegt in den erfindungsgemäßen Zusammensetzungen insbesondere im Bereich von 15 bis 50 Gewichtsprozent, vorzugsweise im Bereich von 20 bis 40 Gewichtsprozent und besonders bevorzugt im Bereich von 25 bis 30 Gewichtsprozent.

Insbesondere bei einem Arbeiten innerhalb der vorangehend genannten Bereichsgrenzen gelangt man zu erfindungsgemäßen wässrigen Beschichtungszusammensetzungen, die sich durch eine große Stabilität bei gleichzeitig sehr anwendungsfreundlicher Viskosität auszeichnen.

Ein besonders ausgeprägter Korrosionsschutz lässt sich auch mit solchen erfindungsgemäßen wässrigen Beschichtungszusammensetzungen erhalten, die
0,4 bis 1,0 Gew.-% eines Metallsalzes, insbesondere eines Zinksalzes, der iso-Phthalsäure, insbesondere der 5-Nitro-iso-phthalsäure,(Komponente c)),
0,4 bis 1,0 Gew.-% eines Metallsalzes, insbesondere Natrium- oder Kaliumsalzes der Benzoesäure oder eines Benzoesäurederivats (Komponente d)),
0,7 bis 1,2 Gew.-% eines Metallsalzes, insbesondere Natrium- oder Kaliumsalzes, der n-Heptansäure (Komponente e)) enthalten sowie gegebenenfalls auch ,
2 bis 10 Gew.-%, insbesondere 3 bis 8 Gew.-%, Zink-Molybdän-Orthophosphathydrat (Komponente f)).

Geeignete organische Bindemittel sind dem Fachmann bekannt. Hierfür kann grundsätzlich auf solche organischen Bindemittel in Form in Wasser dispergierter bzw. in Wasser dispergierbarer Polymere zurückgegriffen werden, die gebildet sind aus I) Acrylsäureestern und Vinylaromaten oder aus II) Acrylsäureestern und Vinylestern mindestens einer Koch-Säure und gegebenenfalls Vinylaromaten, insbesondere Styrol. Besonders bevorzugte organische Bindemittel stellen sogenannte Dispersionspolymere dar, wie sie für Dispersionsfarben üblicherweise verwendet werden. Solche Dispersionspolymere basieren z.B. auf Copolymeren aus Acrylsäureestern und Styrol oder auf Copolymeren aus Acrylsäureestern und Vinylestern der Versatinsäure. Geeignete Dispersionspolymere gemäß Komponente a) sind regelmäßig als wässrige Dispersion im Handel erhältlich, z.B. enthaltend etwa 50 Gew.-% an Wasser.

Geeignete organische Lösemittel (Komponente b)) können polarer und unpolarer Natur sein, besonders bevorzugt polarer Natur. Geeignete polare, wasserlösliche Lösemittel umfassen z.B. Verbindungen wie niedrige alipathische einwertige Alkohole, wie beispielsweise Methanol, Ethanol, n-Propanol, Isopropanol, n-Butanol, Pentanole oder Hexanole oder deren Mischungen, zweiwertige Alkohole wie z.B. 1,6-Hexandiol, dreiwertige Alkohole wie z.B. Glycerin, des weiteren Glykole wie Propylenglykol und Butylglykol, Glykolether wie Dipropylenglykol, Triethylenglykol, Tripropylenglykol, Propylenglykolmethylether und Propylenglykolmethylethylether, Ester wie Ethylacetat, Ketone und Ketoalkohole wie Diacetonalkohol, oder Esteralkohole. Selbstverständlich können auch beliebige Mischungen an polaren organischen Lösemitteln verwendet werden. Geeignete unpolare organische Lösemittel umfassen alipathische Kohlenwasserstoffe, wie Benzin oder Testbenzin, höhere alipathische Alkohole, wie beispielsweise Ethylhexanol, Isodecanol sowie Isononanol. Selbstverständlich können auch beliebige Mischungen an unpolaren organischen Lösemitteln verwendet werden. Mischungen aus unpolaren und polaren organischen Lösemitteln können mit den erfindungsgemäßen Beschichtungssystemen ebenfalls zum Einsatz kommen. Bevorzugt kommen-Glykole wie Propylenglycol und Butylglykol, Glycolether wie Propylenglykolmethylether und Propylenglykolmethylethylether zum Einsatz.

Der Anteil an organischem Lösemittel bzw. Komponente b) in der erfindungsgemäßen wässrigen Beschichtungszusammensetzung liegt bevorzugt nicht oberhalb von 130 g/l, besonders bevorzugt nicht oberhalb von 60 g/l.

Als Filmbildehilfsmittel kommen beispielsweise Dicarbonsäuredialkylester, hochsiedende Benzine, Testbenzin, und Naphthaline in Betracht, die einen Siedepunkt über 100°C, vorzugsweise über 140°C aufweisen. Geeignete Filmbildehilfsmittel umfassen zum Beispiel auch Texanol (2,2,4-Trimethyl-1,3-pentandiol-monoisobutyrat), Dipropylenglycol-n-butylether (DPnB), Thripropylenglycol-n-butylether (TPnB), Dimethylphthalat (DMP), Butylenglykol, Fettalkoholethoxylate wie die Ethoxylate von Laurylalkohol, Isotridecanol, Myristylalkohol, Cetylalkohol und/oder Stearylalkohol, Benzoesäureisononylester wie Isononylbenzoat, 2-Ethylhexylbenzoat oder Isodecylbenzoat sowie deren beliebige Mischungen. Unter einem Filmbildehilfsmittel versteht man im Allgemeinen eine Verbindung, die die (Mindest-) Filmbildetemperatur (MFT) einer Polymerdispersion herabsetzt, damit auch bei niedriger Temperatur eine vollständige Verfilmung stattfindet. Die Wirksamkeit der Filmbildehilfsmittel beruht regelmäßig darauf, dass sie in die Polymere migrieren und infolge Solvatation der Polymerteilchen deren Viskosität erhöhen. Ein Filmbildehilfsmittel im Sinne der Erfindung stellt stets auch ein organisches Lösemittel dar. Somit kann für die erfindungsgemäßen wässrigen Zusammensetzungen auf organische Lösemittel zurückgegriffen werden, die gleichzeitig als Filmbildehilfsmittel fungieren, D.h. geeignete Filmbildehilfsmittel fungieren auch als organisches Lösemittel. Allerdings stellt nicht jedes für die erfindungsgemäße Zusammensetzung geeignete organische Lösemittel gleichzeitig auch ein Filmbildehilfsmittel dar. Demgemäß sind mit der vorliegenden Erfindung auch solche wässrigen Zusammensetzungen umfasst, die neben mindestens einem organischen Lösemittel auch mindestens ein Filmbildehilfsmittel enthalten. In diesem Fall bilden das organische Lösemittel und das Filmbildehilfsmittel gemeinsam die Komponente b). Die der Erfindung zu Grunde liegende Aufgabe wird daher auch durch solche wässrigen Zusammensetzungen gelöst, die mindestens ein organisches Lösemittel enthalten, das nicht gleichzeitig auch als Filmbildehilfsmittel fungiert. Bevorzugt sind solche erfindungsgemäßen wässrigen Zusammensetzungen, bei denen als Komponente b) sowohl ein organisches Lösemittel, das nicht als Filmbildehilfsmittel fungiert, als auch ein Filmbildehilfsmittel vorliegen.

Der Gesamtgehalt an organischen Lösemitteln, einschließlich der Filmbildehilfsmittel, liegt in den erfindungsgemäßen Beschichtungszusammensetzungen bevorzugt im Bereich von 1 bis 14 Gew.-% und insbesondere 1 bis 8,5 Gew.-%. Der Gesamtgehalt an organischen Lösemitteln, die nicht gleichzeitig auch Filmbildehilfsmittel sind, liegt in den erfindungsgemäßen Beschichtungszusammensetzungen bevorzugt im Bereich von 1 bis 10 Gewichtsprozent und besonders bevorzugt unterhalb von 4 Gew.-%. Der Anteil an Filmbildehilfsmitteln liegt in diesen Zusammensetzungen vorteilhafterweise nicht oberhalb von 3,5 Gew.-%. Ferner liegt der Anteil an organischen Lösemitteln und Filmbildehilfsmitteln vorzugsweise im Bereich von 10 bis 60 g/l und besonders bevorzugt im Bereich von 25 bis 50 g/l.

Mit den erfindungsgemäßen wässrigen Beschichtungszusammensetzungen ist es grundsätzlich möglich, einen geringen Anteil an flüchtigen organischen Verbindungen (VOC) zu verwirklichen. Für die erfindungsgemäßen wässrigen Beschichtungszusammensetzungen liegt dieser Anteil an flüchtigen organischen Verbindungen bevorzugt bei maximal 150 g/l und besonders bevorzugt nicht oberhalb von 130 g/l und insbesondere nicht oberhalb von 60 g/l.

Die Komponente c) der erfindungsgemäßen wässrigen Beschichtungszusammensetzungen stellt mindestens eine in Wasser lösliche Form der Nitrophthalsäure dar. Bei der in Wasser löslichen Form der Nitrophthalsäure handelt es sich zweckmäßigerweise um Salze, vorzugsweise Metallsalze, der Nitrophthalsäure. Mit den erfindungsgemäßen wässrigen Beschichtungszusammensetzungen stellt sich ein wirksamer Korrosionsschutz insbesondere auch dann ein, wenn die Komponente c) ein Zinksalz der Nitrophthalsäure darstellt oder umfasst, insbesondere ein Metallsalz, insbesondere ein Zinksalz, der iso-Nitrophthalsäure, insbesondere der 5-Nitro-iso-phthalsäure.

Als Komponente d) kommt mindestens eine in Wasser lösliche Form einer aromatischen Carbonsäure zum Einsatz. Im Sinne der vorliegenden Erfindung fallen in Wasser lösliche Formen der Nitrophthalsäure nicht unter die Komponente d). D.h. als Komponente d) kommt mindestens eine in Wasser lösliche Form einer aromatischen Carbonsäure zum Einsatz, die nicht eine in Wasser lösliche Form der Nitrophthalsäure ist. Besonders geeignet sind als Komponente d) in Wasser lösliche Formen einer aromatischen Monocarbonsäure. Bei der in Wasser löslichen Form der aromatischen Carbonsäure handelt es sich zweckmäßigerweise um Salze, vorzugsweise Metallsalze, der aromatischen Carbonsäure. Gute Korrosionsschutzeigenschaften stellen sich insbesondere auch dann ein, wenn als Komponente d) auf ein Metallsalz, insbesondere ein Natriumsalz, einer aromatischen Carbonsäure, insbesondere einer aromatischen Monocarbonsäure, beispielsweise der Benzoesäure oder eines Benzoesäure-Derivats zurückgegriffen wird.

Als Komponente e) wird mindestens eine in Wasser lösliche Form einer aliphatischen C₆- bis C₉- Carbonsäure, insbesondere mindestens eine in Wasser lösliche Form einer aliphatischen C₆- bis C₉-Monocarbonsäure verwendet. Hierbei handelt es sich vorzugsweise um Salze, vorzugsweise Metallsalze, dieser Carbonsäuren, insbesondere Monocarbonsäuren. Außerdem hat es sich als besonders vorteilhaft erwiesen, dass die Komponente e) ein Metallsalz, insbesondere ein Natriumsalz, der n-Hexan-, n-Heptan-, n-Octan- oder n-Nonansäure, insbesondere der n-Heptansäure, darstellt oder umfasst. In einer besonders zweckmäßigen Ausgestaltung sind in der erfindungsgemäßen wässrigen Beschichtungszusammensetzung die vorangehend geschilderten bevorzugten Gestaltungen der Komponenten c), d) und e) verwirklicht.

Für die Feststellung der Wasserlöslichkeit der Komponenten c), d) und e) ist das Löslichkeitsverhalten bei Raumtemperatur (ca. 20°C) maßgeblich.

Des Weiteren enthalten die erfindungsgemäßen wässrigen Beschichtungszusammensetzungen gen als Komponente f) mindestens eine Orthophosphatverbindung. Darüber hinaus hat es sich als vorteilhaft erwiesen, als Komponente f) Zink-Molybdän-Orthophosphathydrat zu verwenden.

Organisch modifizierte Schichtsilikate (Komponente g)) sind dem Fachmann bekannt und auch im Handel erhältlich. Hierbei handelt es sich um sogenannte delaminierte Schichtsilikate, bei denen in der Schichtenstruktur, d.h. zwischen den Schichten kationische organische Verbindungen vorliegen. Man spricht hier auch von Interkalationsverbindngen. Besonders bevorzugt erhält man solche delaminierten Schichtsilikate mittels Modifizierung mit Alkylammonium- oder Ammoniumalkoxylat-Verbindungen.

Für die Komponente g) der erfindungsgemäßen wässrigen Beschichtungszusammensetzung kann alternativ oder zusätzlich auch auf Polyurethanverdicker zurückgegriffen werden, gegebenenfalls zusätzlich zu organischen modifizierten Schichtsilikaten. Dabei hat es sich als vorteilhaft erwiesen, solche Polyurethanverdicker einzusetzen, die keine Acrylat-, Zellulose-, Stärke- und/oder Polysaccharide-Derivate enthalten. In einer zweckmäßigen Ausgestaltung kann der Polyurethanverdicker in einem wässrigen System eingesetzt werden, beispielsweise in einem wässrigen System aus Wasser und 2-(2-Butoxyethoxy)ethanol. Besonders geeignet sind auch, insbesondere lösemittelfreie, nicht-ionische Palyurethanverdicker.

Neben den vorangehend genannten organisch modifizierten Schichtsilikaten (Komponente g)) verfügt die wässrige Beschichtungszusammensetzung gemäß der vorliegenden Erfindung über mindestens ein blättchenförmiges Material anorganischen Ursprungs ausgewählt aus der Gruppe bestehend aus Glimmer, insbesondere Eisenglimmer, Kaolin, blättchenförmigem Quarz, Glasblättchen (Flakes) und Schichtsilikaten oder deren Mischung (Komponente h)).

Geeignete Schichtsilikate der Komponente h) können dabei ausgewählt sein aus der Gruppe bestehend aus Serpentin, Kaolin, Talk, Pyrophyllit, Vermiculit, Illit, Glimmer und Sprödglimmer oder deren Mischungen und/oder aus der Gruppe bestehend aus Smectit, Montmorillonit, Hectorit und Bentonit oder deren Mischungen. Während Serpentin, Kaolin, Talk, Pyrophyllit, Vermiculit, Illit, Glimmer und/oder Sprödglimmer in den erfindungsgemäßen wässrigen Zusammensetzungen bevorzugt als Barrierebildner eingesetzt werden, greift man auf Smectit, Montmorillonit, Hectorit und/oder Bentonit vorrangig als Verdicker zurück. Bei den als Komponente h) eingesetzten Schichtsilikaten handelt es sich um herkömmliche Schichtsilikate, d.h. um solche, die anders als die der Komponente g) nicht organisch modifiziert wurden und demgemäß nicht in delaminierter Form vorliegen.

Mit den geschilderten Komponenten der erfindungsgemäßen Beschichtungszusammensetzung lassen sich ohne weiteres Viskositäten im Bereich von 450 bis 450 mPas, bestimmt bei 20°C, einstellen. Auf diese Weise gelangt man zu sehr verarbeitungsfreundlichen Beschichtungszusammensetzungen, die gleichwohl über eine hinreichende Stabilität verfügen.

Die erfindungsgemäßen Zusammensetzungen können z.B. unter Zuhilfenahme geeigneter Rührwerkzeuge, z.B. von sogenannten Dissolvern erhalten werden. Bei einem Dissolver handelt es sich im Allgemeinen um schnelllaufende Rührscheibengeräte, die einen Rührbehälter und einem Scheibenrührer aufweisen.

Die der Erfindung zu Grunde liegende Aufgabe wird des Weiteren gelöst durch eine Lackbeschichtung, erhalten durch Auftragen einer erfindungsgemäßen wässrigen Beschichtungszusammensetzung. Hierbei haben sich solche Lackbeschichtungen als besonders korrosionsbeständig herausgestellt, die mindestens zwei, insbesondere mindestens drei Beschichtungsaufträge der erfindungsgmäßen wässrigen Beschichtungszusammensetzung umfassen. Hierbei ist jeder nachfolgende Beschichtungsauftrag auf den vorhergehenden Beschichtungsauftrag vorzugsweise erst dann aufzutragen, wenn dieser vorangegangene Beschichtungsauftrag zuvor einem Trocknungsvorgang unterzogen worden ist. Mit den erfindungsgemäßen Beschichtungszusammensetzungen lassen sich ohne weiteres Lackbeschichtungen mit einer durchschnittlichen Dicke im Bereich von 10 µm bis 300 µm, insbesondere im Bereich von 140 µm bis 220 µm, erhalten. Um Lackbeschichtungen mit einer durchschnittlichen Dicke von 60 µm und mehr, insbesondere von 70 µm und mehr zu erhalten, werden vorzugsweise zwei, insbesondere drei Beschichtungsaufträge benötigt. Von Vorteil bei der erfindungsgemäßen wässrigen Beschichtungszusammensetzung ist somit, dass sich bereits mit einem einmaligen Schichtauftrag eine durchschnittliche Schichtdicke von mindestens 70 µm einstellen lässt. Somit gelangt man bereits durch zweimaligen Schichtauftrag zu hinreichend korrosionsgeschützten Systemen, wobei ein dreimaliger Schichtauftrag bevorzugt ist.

Die erfindungsgemäßen Lackbeschichtungen zeichnen sich in einer bevorzugten Ausgestaltung auch dadurch aus, dass die Pigmentvolumenkonzentration (PVK) im Bereich von 15 bis 30% liegt.

Die der Erfindung zu Grunde liegende Aufgabe wird des Weiteren gelöst durch ein Metallsubstrat, insbesondere ein Stahlsubstrat, das mit einer erfindungsgemäßen Lackbeschichtung versehen worden ist. Neben Stahlsubstraten umfassen die erfindungsgemäßen beschichteten Metallsubstrate insbesondere auch Zink- und Kupfersubstrate. Unter den Stahlsubstraten sind gestrahlte Stahlsubstrate mit einem Normreinigungsgrad SA2 ½ nach DIN EN ISO 8501-1 besonders geeignet. Es hat sich überraschender Weise gezeigt, dass bei Verwendung der erfindungsgemäßen Lackbeschichtungen bzw. der erfindungsgemäßen wässrigen Beschichtungszusammensetzung keine Grundierungsschicht auf dem Metallsubstrat erforderlich ist, um zu einem sehr hohen Korrosionsschutz zu gelangen. Selbstverständlich stellt sich ein besonders wirksamer Korrosionsschutz nicht nur bei gestrahlten Metallbauteilen ein, sondern auch bei solchen, die einer sogenannten Handentrostung unterzogen worden sind.

Die erfindungsgemäßen wässrigen Beschichtungszusammensetzungen können zum Beispiel in Form eines Malerlacks, Bautenlacks, Industrielacks oder Konsumlacks eingesetzt werden.

Um die erfindungsgemäßen wässrigen Beschichtungszusammensetzungen auf einem Metallsubstrat, insbesondere einem Stahlsubstrat, zu applizieren, greift man vorzugsweise auf das Roll-Streich-Verfahren oder das Spritzverfahren zurück. In einer zweckmäßigen Ausgestaltung kann als Spritzverfahren das Airless-Spritzverfahren eingesetzt werden.

Die erfindungsgemäßen wässrigen Beschichtungszusammensetzungen können sowohl für die Beschichtung von Metallsubstraten im Innenbereich wie auch im Außenbereich eingesetzt werden.

Es hat sich als besonders vorteilhaft erwiesen, dass sich die erfindungsgemäßen wässrigen Beschichtungszusammensetzungen auf einfache Weise abtönen lassen. Hierfür kann zum Beispiel auf die erfindungsgemäße wässrige Beschichtungszusammensetzung in Form einer farblosen Grundrezeptur zurückgreifen, z.B. auf Basis der Komponenten a) bis i) und gegebenenfalls mindestens einer Komponente ausgewählt aus der Gruppe bestehend aus den Komponenten k) bis p) oder deren beliebige Mischungen. Diese Grundrezeptur kann dann mit einer Abtönzusammensetzung, enthaltend mindestens ein Pigment und/oder mindestens einen Farbstoff (Komponente j)) sowie insbesondere mindestens ein Netzmittel (Komponente k)) und Wasser (Komponente i)) sowie gegebenenfalls mindestens ein Wasserretentionsmittel (Komponente 1) gezielt eingefärbt werden. Derartige Abtönzusammensetzungen liegen bevorzugt in Pastenform vor. Bei Einsatz von Pigmenten zur Farbgebung hat es sich als vorteilhaft erwiesen, diese Abtönzusammensetzungen, insbesondere in Pastenform, mit einem Netzmittel und Wasser sowie gegebenenfalls auch mit einem Wasserretentionsmittel auszustatten.

Besonders zufriedenstellende Resultate stellen sich insbesondere auch dadurch ein, dass man auf Dispersionspolymere zurückgreift, gebildet aus hydrophoben Acrylat-Monomeren und Styrol bzw. aus Acrylat-Monomeren und Vinylestern der Versatinsäure.

Um zu einer bevorzugten hydrophob eingestellten Beschichtungszusammensetzung zu gelangen hat sich als vorteilhaft erwiesen, auf hydrophob eingestellte Verdicker auf Polyurethanbasis zurückzugreifen sowie alternativ oder zusätzlich organisch modifizierte Schichtsilikate zu verwenden. Auf diese Weise gelangt kann man überdies zu Beschichtungszusammensetzungen mit einer sehr hohen Strukturviskosität gelangen, die nicht zum Ablaufen selbst nach Applikation auf senkrechte Metallsubstrate neigen. Hierbei sind organisch modifizierten Schichtsilikate auf Smectit-, Montmorillonit-, Hectorit- und/oder Bentonitbasis besonders bevorzugt.

Durch den Einsatz von Entlüftern und/ oder Entschäumern (Komponente n)) gelangt man mit den erfindungsgemäßen wässrigen Beschichtungszusammensetzungen zu vollständig blasenfreien Lackbeschichtungen. Geeignete Entschäumer umfassen z.B. Mineralölentschäumer, Siliconentschäumer oder Entschäumer auf Basis von Polyalkylenglykolethern. Entschäumer auf Silicon-Basis sind bevorzugt.

Mit den erfindungsgemäßen Beschichtungszusammensetzungen erhält man Beschichtungen, die Korrosionsschutz nach DIN EN ISO 12944-6 C3 lang erfüllen. Beispielsweise beobachtet man bei einem mit der erfindungsgemäßen Lackbeschichtung versehenen gestrahlten Stahl (SA2 ½), das heißt bei einem Stahl mit einer Rautiefe von ca. 70 µm, selbst nach 480 Stunden Salzsprühtest keine signifikante Unterwanderung bzw. kein ausgeprägtes Abblättern der Korrosionsschutzbeschichtung. Auch übersteht ein mit einer erfindungsgemäßen Lackbeschichtung versehenes Zinksubstrat einen 240 Stunden Blister-Test im Wesentlichen unbeschadet.

Des Weiteren wurde überraschend gefunden, dass die erfindungsgemäßen Beschichtungszusammensetzungen, wenn an senkrechten Flächen mittels Roll-Streich-oder Spritzverfahren, beispielsweise Airless-Spritzverfahren, appliziert, selbst bei einer Nass-Schichtstärke von durchschnittlich 200 µm nicht zu einem Ablaufen neigen.

Überraschenderweise erreicht man mit den erfindungsgemäßen wässrigen Beschichtungszusammensetzungen, und zwar insbesondere auch als Eintopf-Beschichtungssysteme, Lackbeschichtungen, die in die Korrosionsschutzklasse C3 lang nach DIN EN ISO 12944-6 bei einer Trockenschichtstärke von durchschnittlich 200 µm eingeordnet werden können. Dieses ist mit wässrigen Beschichtungszusammensetzungen in Form von Eintopfsystemen bislang nicht möglich gewesen. Des Weiteren zeichnet sich die erfindungsgemäße wässrige Beschichtungszusammensetzung durch ein schnelles Abtrocknen aus. Dadurch wird ein zügiges Arbeiten ermöglicht, ohne Einbußen beim Korrosionsschutz in Kauf nehmen zu müssen. So wurde mit den erfindungsgemäßen Beschichtungszusammensetzungen gefunden, dass bei Applikation einer Nass-Schichtstärke von bis zu 200 µm nach einer Zeitdauer von zwei Stunden bei Normklima nach DIN EN 23270 ein Trockengrad von 3 nach DIN EN ISO 9117-5 erreicht wird.

Als besonders vorteilhaft hat sich ebenfalls erwiesen, dass die erfindungsgemäßen Lackbeschichtungen gemäß dem Gitterschnitttest eine direkte Haftung von GT 0-1 nach DIN EN ISO 2409 insbesondere auch auf Untergründen aus Zink, Kupfer und gestrahltem Stahl (Normreinigungsgrad SA 2 ½ nach DIN EN ISO 8501-1) ermöglichen. Hierbei hat sich herausgestellt, dass die nicht organisch modifizierten Schichtsilikate, insbesondere Serpentin, Kaolin, Talk, Pyrophyllit, Vermiculit, Illit, Glimmer und/oder Sprödglimmer, zu einer besonderen Barrierebildung bei den Lackbeschichtungen aus den erfindungsgemäßen wässrigen Beschichtungszusammensetzungen beitragen.

Hierbei ist auch von Vorteil, dass mit den erfindungsgemäßen Lackbeschichtungen gemäß ISO 4628-2 ein Blasengrad von S0-1 erreicht wird. Von besonderem Vorteil ist darüber hinaus, dass sich die vorangehend genannten Korrosionsschutz- und Trocknungseigenschaften auch mit solchen erfindungsgemäßen wässrigen Beschichtungszusammensetzungen einstellen, die mit Pigmentpräparationen, insbesondere auch wässrigen Pigmentpräparationen, abgetönt worden sind.

Unter Umweltgesichtspunkten hat sich darüber hinaus als sehr zweckmäßig erwiesen, dass der Anteil an flüchtigen organischen Verbindungen (VOC) sehr niedrig gehalten werden kann, ohne Beeinträchtigungen beim Fließverhalten, der Applikation und der Stabilität in Kauf nehmen zu müssen.

Die in der voranstehenden Beschreibung und den Ansprüchen offenbarten Merkmale der Erfindung können sowohl einzeln als auch in jeder beliebigen Kombination für die Verwirklichung der Erfindung vorteilhaft sein.

## Patentansprüche

1. Wässrige Zusammensetzung für Metallschutzlacke, insbesondere wässrige Eintopfzusammensetzung, umfassend
a) mindestens ein organisches Bindemittel auf der Basis mindestens eines in Wasser dispergierten oder dispergierbaren Polymers, gebildet aus gleichen oder verschiedenen Monomeren, wobei mindestens eines der Monomere ein Acrylsäureester, Methacrylsäureester, Vinylacetat, Vinylchlorid, Versatat, Acrylnitril oder eine vinylaromatische Verbindung darstellt,
b) mindestens ein organisches Lösemittel und/oder mindestens ein Filmbildehilfsmittel,
c) mindestens eine in Wasser lösliche Form der Nitrophthalsäure,
d) mindestens eine in Wasser lösliche Form einer aromatischen Carbonsäure, insbesondere mindestens eine in Wasser lösliche Form einer aromatischen Monocarbonsäure,
e) mindestens eine in Wasser lösliche Form einer aliphatischen C₆- bis C₉-Carbonsäure, insbesondere mindestens eine in Wasser lösliche Form einer aliphatischen C₆- bis C₉-Monocarbonsäure,
f) mindestens eine Orthophosphatverbindung,
g) mindestens eine organisch modifizierte Schichtsilikatkomponente und/oder mindestens einen Polyurethanverdicker,
h) mindestens ein blättchenformiges Material anorganischen Ursprungs, ausgewählt aus der Gruppe bestehend aus Glimmer, insbesondere Eisenglimmer, Kaolin, blättchenförmigem Quarz, Glasblättchen (Flakes), nicht organisch modifizierten und nicht in delaminierter Form vorliegenden Schichtsilikaten und deren Mischung, und
i) Wasser.

2. Wässrige Zusammensetzung nach Anspruch 1, ferner umfassend
j) mindestens ein Pigment, insbesondere Weißpigment oder Buntpigment, und/oder mindestens einen Farbstoff.

3. Wässrige Zusammensetzung nach Anspruch 1 oder 2, ferner umfassend
k) mindestens ein Netzmittel und/oder
1) mindestens ein Wasserretentionsmittel.

4. Wässrige Zusammensetzung nach einem der vorangehenden Ansprüche, ferner umfassend
m) mindestens einen, insbesondere silikatischen und/oder calcitischen, Füllstoff.
n) mindestens einen Entschäumer und/oder Entlüfter, insbesondere jeweils auf Silikonbasis, und/oder
o) mindestens ein Konservierungsmittel.

5. Wässrige Zusammensetzung nach einem der vorangehenden Ansprüche, ferner umfassend
p) mindestens ein flüchtiges Neutralisationsmittel, insbesondere Ammoniak und/oder 2-Amino-2-methyl-1 -propanol.

6. Wässrige Zusammensetzung nach einem der vorangehenden Ansprüche, umfassend 5 bis 35 Gew.-% an Komponente a),
1 bis 14 Gew.-%, insbesondere 1 bis 8.5 Gew.-%, an Komponente b),
0,4 bis 1,0 Gew.-% an Komponente c),
0,4 bis 1,0 Gew.-% an Komponente d),
0,7 bis 1,2 Gew.-% an Komponente e),
2 bis 10 Gew.-%, insbesondere 3 bis 8 Gew.-%, an Komponente f),
15 bis 35 Gew.-%, insbesondere 4 bis 9 Ges.-%, an Komponente g),
2 bis 10 Gew.-%, insbesondere 4 bis 9 Gew.-%, an Komponente h),
0 bis 35 Gew.-%, insbesondere 5 bis 35 Gew.-%, besonders bevorzugt 0,5 bis 19 Gew.-%, an Komponente j),
0 bis 8 Gew.-%, insbesondere 0,2 bis 4 Gew.-%, an Komponente k),
0 bis 6 Gew.-%, insbesondere 0 bis 3 Gew.-%, an Komponente 1),
0 bis 20 Gew.-%, insbesondere 6 bis 15 Gew.-%, an Komponente m),
0 bis 1,5 Gew.-%, insbesondere 0 bis 1 Gew.-%, an Komponente n),
0 bis 0,4 Gew.-%, insbesondere 0 bis 0,3 Gew.-%, an Komponente o) und
0 bis 1 Gew.-%, insbesondere 0 bis 0,5 Gew.-%, an Komponente p) und
wobei die Menge der Komponenten a) bis h) und j) bis p) stets so gewählt wird, dass deren Summe kleiner 100 Gew.-% ist und wobei Wasser (Komponente i)) in einer Menge vorliegt, dass die Gesamtmenge an Komponenten der wässrigen Zusammensetzung stets 100 Gew.-% ergibt, wobei die Menge an Wasser insbesondere im Bereich von 15 bis 50 Gew.-%, vorzugsweise im Bereich von 20 bis 40 Gew.-% und besonders bevorzugt im Bereich von 25 bis 30 Gew.-% liegt.

7. Wässrige Zusammensetzung nach einem der vorangehenden Ansprüche, **dadurch gekennzeichnet, dass** das organische Bindemittel mindestens ein in Wasser dispergiertes oder dispergierbares Polymer, gebildet sind aus I) Acrylsäureestern und Vinylaromaten, insbesondere Styrol, oder aus II) Acrylsäureestern und Vinylestern mindestens einer Koch-Säure, insbesondere der Versatinsäure, und gegebenenfalls Vinylaromaten, insbesondere Styrol.

8. Wässrige Zusammensetzung nach einem der vorangehenden Ansprüche, **dadurch gekennzeichnet, dass**
Komponente c) ein Metallsalz, insbesondere ein Zinksalz, der iso-Phthalsäure, insbesondere der 5-Nitro-iso-phthalsäure, darstellt oder umfasst.

9. Wässrige Zusammensetzung nach einem der vorangehenden Ansprüche, **dadurch gekennzeichnet, dass**
Komponente d) ein Metallsalz, insbesondere Natrium- oder Kaliumsalz der Benzoesäure oder eines Benzoesäurederivats darstellt oder umfasst.

10. Wässrige Zusammensetzung nach einem der vorangehenden Ansprüche, **dadurch gekennzeichnet, dass**
Komponente e) ein Metallsalz, insbesondere Natrium- oder Kaliumsalz der n-Heptansäure darstellt oder umfasst.

11. Wässrige Zusammensetzung nach einem der vorangehenden Ansprüche, **dadurch gekennzeichnet, dass**
Komponente f) Zink-Molybdän-Orthophosphathydrat darstellt oder umfasst.

12. Wässrige Zusammensetzung nach einem der vorangehenden Ansprüche, **dadurch gekennzeichnet, dass**
die Schichtsilikatkomponente (Komponente h)) ausgewählt ist aus der Gruppe bestehend aus Serpentin, Kaolin, Talk, Pyrophyllit, Vermiculit, Illit, Glimmer und Sprödglimmer oder deren Mischungen und/oder dass die Schichtsilikatkomponente ausgewählt ist aus der Gruppe bestehend aus Smectit, Montmorillonit, Hectorit und Bentonit oder deren Mischungen.

13. Wässrige Zusammensetzung nach einem der vorangehenden Ansprüche, **dadurch gekennzeichnet, dass**
der mindestens eine Polyurethanverdicker keine Acrylat-, Cellulose-, Stärke- und/oder Polysaccharid-Derivate enthält.

14. Wässrige Zusammensetzung nach einem der vorangehenden Ansprüche, **dadurch gekennzeichnet, dass**
der Anteil des organischen Lösemittels maximal 60 g/l beiträgt.

15. Wässrige Zusammensetzung nach einem der vorangehenden Ansprüche, **dadurch gekennzeichnet, dass** diese eine Viskosität im Bereich von 450 bis 750 mPas, gemessen bei 20 Grad Celsius, aufweist.

16. Lackbeschichtung, erhalten durch ein- oder mehrmaliges Auftragen einer wässrigen Zusammensetzung nach einem der vorangehenden Ansprüche.

17. Lackbeschichtung nach Anspruch 16, umfassend mindestens zwei, insbesondere drei, Beschichtungsaufträge der wässrigen Zusammensetzung nach einem der Ansprüche 1 bis 15.

18. Lackbeschichtung nach Anspruch 17, **dadurch gekennzeichnet, dass** vor Auftrag einer nachfolgenden Lackbeschichtung auf die vorherige Lackbeschichtung letztere zuvor einem Trocknungsvorgang unterzogen wurde.

19. Lackbeschichtung nach einem der Ansprüche 16 bis 18, **dadurch gekennzeichnet, dass** die PVK im Bereich von 15 bis 30 Prozent liegt.

20. Metallsubstrat, enthaltend eine Lackbeschichtung gemäß einem der Ansprüche 16 bis 19.

21. Metallsubstrat nach Anspruch 20, **dadurch gekennzeichnet, dass** dieses ein Zink-, Eisen-, Kupfer- oder Stahlsubstrat, insbesondere ein gestrahltes Stahlsubstrat mit einem Normreinigungsgrad SA 2 ½ nach DIN EN ISO 8501-1, darstellt.

22. Metallsubstrat nach Anspruch 20 oder 21, **dadurch gekennzeichnet, dass** zwischen Metallsubstrat und Lackbeschichtung keine Grundierungsschicht, insbesondere keine Haftgrundierungsschicht, vorliegt.

23. Verwendung der wässrigen Zusammensetzung nach einem der Ansprüche 1 bis 15 als Eintopf-Beschichtungszusammensetzung und/oder als Malerlack, Bautenlack, Industrielack oder Konsumlack.

24. Verfahren zur Beschichtung eines Metallsubstrats, insbesondere nach einem der Ansprüche 20 bis 22, mit einer wässrigen Zusammensetzung nach einem der Ansprüche 1 bis 15, **dadurch gekennzeichnet, dass** die wässrige Zusammensetzung mittels Roll-Streich- Verfahren oder mittels Spritzverfahren aufgetragen wird.

25. Kit-of-parts, enthaltend
eine erste Komponente, umfassend eine wässrige Beschichtungszusammensetzung nach einem der Ansprüche 1 bis 15 umfassend die Komponenten a) bis i) und gegebenenfalls mindestens eine Komponente ausgewählt aus der Gruppe bestehend aus den Komponenten k) bis p) oder deren beliebige Mischung, und eine zweite Komponente, umfassend eine, insbesondere pastenförmige, Abtönzusammensetzung, enthaltend mindestens ein Pigment und/oder mindestens einen Farbstoff (Komponente j)), mindestens ein Netzmittel (Komponente k)) und Wasser (Komponente i)) sowie gegebenenfalls mindestens ein Wasserretentionsmittel (Komponente 1)).

## Claims

1. An aqueous composition for varnishes for protecting metal, in particular an aqueous one-pot composition, comprising
a) at least one organic binding agent based on at least one polymer which is dispersed or dispersible in water, formed from the same or different monomers, wherein at least one of the monomers constitutes an acrylic acid ester, methacrylic acid ester, vinyl acetate, vinyl chloride, versatate, acrylonitrile or a vinyl aromatic compound,
b) at least one organic solvent and/or at least one film-forming agent,
c) at least one water-soluble form of nitrophthalic acid,
d) at least one water-soluble form of an aromatic carboxylic acid, in particular at least one water-soluble form of an aromatic monocarboxylic acid,
e) at least one water-soluble form of an aliphatic C₆-C₉ carboxylic acid, in particular at least one water-soluble form of an aliphatic C₆-C₉ monocarboxylic acid,
f) at least one orthophosphate compound,
g) at least one organically modified layer silicate component and/or at least one polyurethane thickener,
h) at least one lamellar material of inorganic origin, selected from the group consisting of mica, in particular micaceous iron ore, kaolin, lamellar quartz, glass flakes, layer silicates which are not organically modified and not present in a delaminated form and the mixture thereof, and
i) water.

2. The aqueous composition according to Claim 1, further comprising
j) at least one pigment, in particular a white pigment or colored pigment, and/or at least one dye.

3. The aqueous composition according to Claim 1 or 2, further comprising
k) at least one wetting agent and/or
1) at least one water retention agent.

4. The aqueous composition according to any one of the preceding claims, further comprising
m) at least one, in particular siliceous and/or calcitic, filler,
n) at least one foaming inhibitor and/or deaerator, in particular in each case based on silicone, and/or
o) at least one preservative.

5. The aqueous composition according to any one of the preceding claims, further comprising
p) at least one volatile neutralizing agent, in particular ammonium and/or 2-amino-2-methyl-1-propanol.

6. The aqueous composition according to any one of the preceding claims, comprising 5 to 35 wt % of component a),
1 to 14 wt %, in particular 1 to 8.5 wt %, of component b),
0.4 to 1.0 wt % of component c),
0.4 to 1.0 wt % of component d),
0.7 to 1.2 wt % of component e),
2 to 10 wt %, in particular 3 to 8 wt %, of component f),
15 to 35 wt %, in particular 4 to 9 wt %, of component g),
2 to 10 wt %, in particular 4 to 9 wt %, of component h),
0 to 35 wt %, in particular 5 to 35 wt %, particularly preferably 0.5 to 19 wt %, of component j),
0 to 8 wt %, in particular 0.2 to 4 wt %, of component k),
0 to 6 wt %, in particular 0 to 3 wt %, of component 1),
0 to 20 wt %, in particular 6 to 15 wt %, of component m),
0 to 1.5 wt %, in particular 0 to 1 wt %, of component n),
0 to 0.4 wt %, in particular 0 to 0.3 wt %, of component o) and
0 to 1 wt %, in particular 0 to 0.5 wt %, of component p) and
wherein the quantity of components a) to h) and j) to p) is always selected such that the sum thereof is less than 100 wt % is and wherein water (component i)) is present in a quantity such that the total quantity of components of the aqueous composition always results in 100 wt %, wherein the quantity of water is in particular in the range of 15 to 50 wt %, preferably in the range of 20 to 40 wt % and, particularly preferably, in the range of 25 to 30 wt %.

7. The aqueous composition according to any one of the preceding claims, **characterized in that** the organic binding agent comprises at least one polymer which is dispersed or dispersible in water, formed from I) acrylic acid esters and vinyl aromatic compounds, in particular styrene, or from II) acrylic acid esters and vinyl esters of at least one cooking acid, in particular af versatic acid and, if necessary, vinyl aromatic compounds, in particular styrene.

8. The aqueous composition according to any one of the preceding claims, **characterized in that**
component c) constitutes or comprises a metal salt, in particular a zinc salt, of isophthalic acid, in particular of 5-nitroisophthalic acid.

9. The aqueous composition according to any one of the preceding claims, **characterized in that**
component d) constitutes or comprises a metal salt, in particular a sodium or potassium salt, of benzoic acid or a benzoic acid derivative.

10. The aqueous composition according to any one of the preceding claims, **characterized in that**
component e) constitutes or comprises a metal salt, in particular a sodium or potassium salt, of n-heptanoic acid.

11. The aqueous composition according to any one of the preceding claims, **characterized in that**
component f) constitutes or comprises zinc molybdenum orthophosphate hydrate.

12. The aqueous composition according to any one of the preceding claims, **characterized in that**
the layer silicate component (component h)) is selected from the group consisting of serpentine, kaolin, talc, pyrophyllite, vermiculite, illite, mica and brittle mica or mixtures thereof and/or that the layer silicate component is selected from the group consisting of smectite, montmorillonite, hectorite and bentonite or mixtures thereof.

13. The aqueous composition according to any one of the preceding claims, **characterized in that**
the at least one polyurethane thickener does not contain any acrylate, cellulose, starch and/or polysaccharide derivatives.

14. The aqueous composition according to any one of the preceding claims, **characterized in that**
the proportion of the organic solvent is a maximum of 60 g/l.

15. The aqueous composition according to any one of the preceding claims, **characterized in that** said aqueous composition comprises a viscosity in the range of 450 to 750 mPa·s, measured at 20 degrees Celsius.

16. A varnish coating, obtained by a single or repeated application of an aqueous composition according to any one of the preceding claims.

17. The varnish coating according to Claim 16, comprising at least two, in particular three, coating applications of the aqueous composition according to any one of Claims 1 to 15.

18. The varnish coating according to Claim 17, **characterized in that** prior to applying a subsequent varnish coating to the previous varnish coating, the latter is first subjected to a drying process.

19. The varnish coating according to any one of Claims 16 to 18, **characterized in that** the pigment volume concentration (PVC) is in the range of 15 to 30 percent.

20. A metal substrate, containing a varnish coating according to any one of Claims 16 to 19.

21. The metal substrate according to Claim 20, **characterized in that** said metal substrate constitutes a zinc, iron, copper or steel substrate, in particular a blasted steel substrate having a standard level of cleanliness of SA 2½ in accordance with DIN EN ISO 8501-1.

22. The metal substrate according to Claim 20 or 21, **characterized in that** no priming coat layer, in particular no adhesive priming coat layer, is present between the metal substrate and the varnish coating.

23. Use of the aqueous composition according to any one of Claims 1 to 15 as a one-pot coating composition and/or as a painter's varnish, decorative varnish, industrial varnish or general-use varnish.

24. A method for coating a metal substrate, in particular according to any one of Claims 20 to 22, having an aqueous composition according to any one of Claims 1 to 15, **characterized in that** the aqueous composition is applied by means of a rolling and brushing method or by means of a spraying method.

25. A kit of parts, containing a first component, comprising an aqueous coating composition according to any one of Claims 1 to 15, comprising the components a) to i) and, if necessary, at least one component selected from the group consisting of the components k) to p) or any mixture thereof, and a second component, comprising one tinting composition, in particular in paste form, containing at least one pigment and/or at least one dye (component j)), at least one wetting agent (component k)) and water (component i)) as well as, if necessary, at least one water retention agent (component 1)).

## Revendications

1. Composition aqueuse pour peinture de protection métallique, en particulier composition aqueuse one-pot, comprenant
a) au moins un liant organique à base d'au moins un polymère dispersé ou dispersable dans l'eau, formé de monomères semblables ou différents, au moins un des monomères étant un acrylate, un méthacrylate, un acétate de vinyle, un chlorure de vinyle, un versatate, un acrylonitrile ou un composé vinylaromatique,
b)au moins un solvant organique et/ou au moins un adjuvant filmogène,
c) au moins une forme de l'acide nitrophtalique soluble dans l'eau,
d)au moins une forme d'un acide carboxylique aromatique soluble dans l'eau,
en particulier au moins une forme d'un monoacide carboxylique aromatique soluble dans l'eau,
e)au moins une forme d'un acide carboxylique aliphatique C₆ à C₉ soluble dans l'eau, en particulier au moins une forme d'un monoacide carboxylique aliphatique C₆ à C₉ soluble dans l'eau,
f) au moins un composé d'orthophosphate,
g)au moins un composant de phyllosilicate organiquement modifié et/ou au moins un épaississant polyuréthane,
h)au moins un matériau lamellaire d'origine inorganique, sélectionné parmi le groupe se composant de : mica, en particulier fer micacé, kaolin, quartz lamellaire, lamelles de verre (paillettes), phyllosilicate non organiquement modifié et sous une forme non délaminée, et leurs mélanges, et
i) de l'eau

2. Composition aqueuse selon la revendication 1, comprenant en outre
j) au moins un pigment, en particulier un pigment blanc ou un pigment de couleur, et/ou au moins un colorant.

3. Composition aqueuse selon la revendication 1 ou 2, comprenant en outre
k) au moins un agent mouillant et/ou
1) au moins un agent de rétention d'eau.

4. Composition aqueuse selon l'une des revendications précédentes, comprenant en outre
m)au moins une matière de charge, en particulier siliceuse et/ou calcitique,
n) au moins un antimoussant et/ou un désaérant, en particulier à base de silicone, respectivement, et/ou
o) au moins un agent de conservation.

5. Composition aqueuse selon l'une des revendications précédentes, comprenant en outre
p) au moins un agent neutralisant volatil, en particulier de l'ammoniac et/ou du 2-amino-2-méthyl-1-prapanol.

6. Composition aqueuse selon l'une des revendications précédentes, comprenant de 5 à 35 % massique du composant a),
de 1 à 14 % massique, en particulier de 1 à 8,5 % massique du composant b),
de 0,4 à 1,0 % massique du composant c),
de 0,4 à 1,0 % massique du composant d),
de 0,7 à 1,2 % massique du composant e),
de 2 à 10 % massique, en particulier de 3 à 8 % massique du composant f),
de 15 à 35 % massique, en particulier de 4 à 9 % massique du composant g),
de 2 à 10 % massique, en particulier de 4 à 9 % massique du composant h),
de 0 à 35 % massique, en particulier de 5 à 35 % massique, en particulier de préférence de 0,5 à 19 % massique du composant j),
de 0 à 8 % massique, en particulier de 0,2 à 4 % massique du composant k),
de 0 à 6 % massique, en particulier de 0 à 3 % massique du composant 1),
de 0 à 20 % massique, en particulier de 6 à 15 % massique du composant m),
de 0 à 1,5 % massique, en particulier de 0 à 1 % massique du composant n),
de 0 à 0,4 % massique, en particulier de 0 à 0,3 % massique du composant o) et
de 0 à 1 % massique, en particulier de 0 à 0,5 % massique du composant p) et
la quantité des composants a) à h) et j) à p) étant toujours sélectionnée de telle sorte que leur somme est inférieure à 100 % massique et l'eau (composant i)) étant présente en une quantité telle que la quantité totale de composants de la composition aqueuse donne toujours 100 % massique, la quantité d'eau se trouvant en particulier dans la plage de 15 à à 50 % massique, de préférence dans la plage de 20 à 40 % massique et, en particulier, de préférence dans la plage de 25 à 30 % massique.

7. Composition aqueuse selon l'une des revendications précédentes, **caractérisée en ce que** le liant organique est au moins un polymère dispersé ou dispersable dans l'eau, formés I) d'acrylates et de composés vinylaromatique, en particulier du styrène, ou II) d'acrylates et de vinylesters d'au moins un acide de Koch, en particulier de l'acide versatique, et le cas échéant, de composés vinylarorraatiques, en particulier du styrène.

8. Composition aqueuse selon l'une des revendications précédentes, **caractérisée en ce que**
le composant c) est ou comprend un sel métallique, en particulier un sel de zinc, de l'acide isophtalique, en particulier de l'acide 5-nitro-isophtalique.

9. Composition aqueuse selon l'une des revendications précédentes, **caractérisée en ce que**
le composant d) est ou comprend un sel métallique, en particulier un sel de sodium ou un sel de potassium de l'acide benzoïque ou d'un dérivé de l'acide benzoïque.

10. Composition aqueuse selon l'une des revendications précédentes, **caractérisée en ce que**
le composant e) est ou comprend un sel métallique, en particulier un sel de sodium ou un sel de potassium de l'acide n-heptanoïque.

11. Composition aqueuse selon l'une des revendications précédentes, **caractérisée en ce que**
le composant f) est ou comprend de l'hydrate d'orthophosphate de molybdène de zinc.

12. Composition aqueuse selon l'une des revendications précédentes, **caractérisée en ce que**
le composant de phyllosilicate (composant h)) est sélectionné parmi le groupe se composant de : serpentine, kaolin, talc, pyrophyllite, vermiculite, illite, mica et mica cassant ou leurs mélanges, et/ou **en ce que** le composant de phyllosilicate est sélectionné parmi le groupe se composant de : smectite, montmorillonite, hectorite et bentonite ou leurs mélanges.

13. Composition aqueuse selon l'une des revendications précédentes, **caractérisée en ce que**
l'au moins un épaississant polyuréthane ne contient aucun dérivé d'acrylate, de cellulose, d'amidon et/ou de polysaccharide.

14. Composition aqueuse selon l'une des revendications précédentes, **caractérisée en ce que** la part du solvant organique s'élève au maximum à 60 g/l.

15. Composition aqueuse selon l'une des revendications précédentes, **caractérisée en ce que** celle-ci présente une viscosité dans la plage de 450 à 750 mPa·s, mesuré à 20 degrés Celsius.

16. Couche de peinture, obtenue par une application unique ou multiple d'une composition aqueuse selon l'une des revendications précédentes.

17. Couche de peinture selon la revendication 16, comprenant au moins deux, en particulier trois applications de la composition aqueuse selon l'une des revendications 1 à 15.

18. Couche de peinture selon la revendication 17, **caractérisée en ce que**, avant l'application d'une couche de peinture suivante sur une couche de peinture précédente, cette dernière a été soumise auparavant à un processus de séchage.

19. Couche de peinture selon l'une des revendications 16 à 18, **caractérisée en ce que** la concentration volumique de pigment (PVC) se trouve dans la plage de 15 à 30 %.

20. Substrat métallique comprenant une couche de peinture selon l'une des revendications 16 à 19.

21. Substrat métallique selon la revendication 20, **caractérisé en ce que** celui-ci est un substrat de zinc, de fer, de cuivre ou d'acier, en particulier un substrat d'acier décapé avec un degré de purification SA 2 ½ selon la norme DIN EN ISO 8501-1.

22. Substrat métallique selon la revendication 20 ou 21, **caractérisé en ce qu'**aucune couche primaire, en particulier aucune couche d'apprêt ne se trouve entre le substrat métallique et la couche de peinture,

23. Utilisation de la composition aqueuse selon l'une des revendications 1 à 15 comme composition de revêtement « 2 en 1 » et/ou comme peinture professionnelle, peinture pour bâtiment, peinture industrielle ou peinture grand public.

24. Procédé pour le revêtement d'un substrat métallique, en particulier selon l'une des revendications 20 à 22, avec une composition aqueuse selon l'une des revendications 1 à 15, **caractérisé en ce que** la composition aqueuse est appliquée au moyen d'un procédé d'application au rouleau/au pinceau ou au moyen d'un procédé de pulvérisation.

25. Ensemble d'éléments, comprenant
un premier composant, comprenant une composition de revêtement aqueuse selon l'une des revendications 1 à 15 comprenant les composants a) à i) et, le cas échéant, au moins un composant sélectionné parmi le groupe se composant des composants k) à p) ou de leur mélange quelconque, et un deuxième composant, comprenant une composition de mise en teinte, en particulier sous forme de pâte, comprenant au moins un pigment et/ou au moins un colorant (composant j)), au moins un agent mouillant (composant k)) et de l'eau (composant i)), ainsi que, le cas échéant, au moins un agent de rétention d'eau (composant 1)).
